# EUROPÄISCHE PATENTSCHRIFT

(11) **EP 0 879 142 B1**
(45) Veröffentlichungstag und Bekanntmachung des Hinweises auf die Patenterteilung: **02.07.2003**
(21) Anmeldenummer: 96945891.8
(22) Anmeldetag: 18.11.1996
(51) Int. Cl.: B32B 1/08, B32B 3/28, B32B 5/18, F16L 9/06, F16L 9/14, F16L 11/11, F16L 11/15

(54) **MEHRSCHICHTIGES KUNSTSTOFFROHR**
MULTILAYER PLASTIC TUBING
TUYAU EN PLASTIQUE MULTICOUCHE

(30) Priorität: 19.09.1996 DE 29616289 U
(43) Veröffentlichungstag der Anmeldung: 25.11.1998
(73) Patentinhaber: Uponor Rohrsysteme GmbH, 97437 Hassfurt (DE); REHAU AG + Co, 91058 Erlangen (DE)
(72) Erfinder: RAHN, Horst, D-97437 Hasfurt (DE)
(74) Vertreter: LOUIS- PÖHLAU- LOHRENTZ
(86) Internationale Anmeldenummer: DE9602232
(87) Internationale Veröffentlichungsnummer: WO98012046

(56) Entgegenhaltungen:
- WO-A-96/31723
- DE-A- 4 128 654
- DE-A- 19 504 616
- DE-C- 4 325 021
- US-A- 5 324 557

## Beschreibung

Die Erfindung betrifft ein mehrschichtiges Kunststoffrohr mit einem glatten Innenrohr und einem damit verbundenen gewellten Außenrohr.

Ein solches mehrschichtiges Kunststoffrohr ist aus der DE 41 28 654 A1 bekannt. Bei diesem bekannten mehrschichtigen Kunststoffrohr ist zwischen dem Innen- und dem Außenrohr ein Zwischenrohr vorgesehen, das eine andere Beschaffenheit als das Außenrohr aufweist. Bei dem Zwischenrohr kann es sich um ein geschäumtes Zwischenrohr handeln. Das geschäumte Zwischenrohr kann zumindest teilweise von innen in die Wellen des Außenrohres eingreifen. Das geschäumte Zwischenrohr kann aus einem mittels chemischer Treibmittel hergestellten, frei expandierenden und an einer Kühldornoberfläche oder benachbarten Rohrwandung gebremsten, kompaktierten und abgekühlten Schaum bestehen. Das Außenrohr, das Zwischenrohr und/oder das Innenrohr kann aus PVC, PE und/oder PP bestehen.

Aus der DE 44 30 038 A1 ist ein mehrschichtiges Kunststoffrohr bekannt, das ein innen glattwandiges Innenrohr aus wiederverwendbarem Kunststoff aufweist. Das Innenrohr kann an seinem Außenmantel mit umlaufenden Rippen versehen sein, die mit einem äußeren Mantelrohr verbunden sind. Das äußere Mantelrohr kann ebenfalls aus einem wiederverwendbaren Kunststoff bestehen, es ist mit einer glatten Außenwand ausgebildet.

Die DE 43 25 021 C1 offenbart ein Verfahren und eine Vorrichtung zur Herstellung von mehrschichtigen Kunststoffrohren mit einem glatten Innenrohr und einem damit verbundenen Außenrohr, das eine gewellte Außenoberfläche aufweist. Das Außenrohr besteht aus einem nicht sortenreinen, gewaschenen und zerkleinerten Recyclat, das mit einem geeigneten Treibmittel bspw. in einem Stopfwerk gemischt und durch einen ersten Extruder in einen zugehörigen Spitzkopf eingebracht wird. Aus diesem Spritzkopf tritt gleichzeitig neuwertiges Material für das glatte Innenrohr vom Recyclat getrennt und dieses konzentrisch umgebend aus. Das Gemisch aus Recyclat und Treibmittel für das Außenrohr schäumt nach dem Austritt aus dem Spritzkopf im Raum zwischen dem Innenrohr und den Formbacken eines Corrugators auf. Dabei wird der Zwischenraum zwischen dem Innenrohr und den Formbacken des Corrugators mit dem aufschäumenden Recyclat vollständig ausgefüllt. Das nach diesem bekannten Verfahren hergestellte mehrschichtige Kunststoffrohr weist also ein glattes Innenrohr und ein Außenrohr mit gewellter Außenoberfläche auf, wobei das gewellte Außenrohr ein Vollprofil aus geschäumtem Recyclat aufweist. Dem Aufschäumen des Recyclats sind jedoch Grenzen gesetzt. Diese resultieren aus den Kosten für das Treib- bzw. Schäummittel sowie aus der Aufschäumzeit im Corrugator. Außerdem weist ein derartiges bekanntes mehrschichtiges Kunststoffrohr mit einem Vollprofil-Außenrohr ein entsprechendes Gewicht auf. Um diese Mängel zu eliminieren ist es zwar möglich, die Profilhöhe des gewellten und ein Vollprofil aufweisenden Außenrohres zu reduzieren. Hierdurch ergibt sich jedoch eine Annäherung der Eigenschaften eines solchen mehrschichtigen Kunststoffrohres an die Eigenschaften eines glatten Rohres, d.h. es ergibt sich eine Reduktion der Flexibilität sowie der Druckfestigkeit eines solchen mehrschichtigen Kunststoffrohres.

Der Erfindung liegt die Aufgabe zugrunde, ein mehrschichtiges Kunststoffrohr der eingangs genannten Art zu schaffen, bei welchem die zuletzt genannten Mängel bezüglich Flexibilität und Druckfestigkeit beseitigt sind, wobei eine gewünschte Profilform des mehrschichtigen Kunststoffrohres kostengünstig realisierbar ist.

Diese Aufgabe wird bei einem mehrschichtigen Kunststoffrohr der eingangs genannten Art erfindungsgemäß dadurch gelöst, daß das glatte Innenrohr aus einem ersten Kunststoff und daß das gewellte Außenrohr aus einem mittels eines Treibmittels aufschäumenden zweiten Kunststoff besteht, wobei die Wanddicke des gewellten Außenrohres mindestens 10 % der mittleren Wellbreite des gewellten Außenrohres beträgt.

Bekannte mehrschichtige Kunststoffrohre der eingangs genannten Art, wie sie aus der eingangs zitierten DE 41 28 654 A1 bekannt sind, weisen ein nicht geschäumtes gewelltes Außenrohr mit einer Wanddicke auf, die zwischen 5 und maximal 10 % der mittleren Wellbreite des gewellten Außenrohres beträgt. Unter der mittleren Wellbreite ist die axiale Außen-Abmessung einer Welle auf ihrer halben Wellenhöhe - in radialer Richtung des Rohres gesehen - zu verstehen. Eine derartig kleine Wanddicke des gewellten Außenrohres ist bei den bekannten mehrschichtigen Kunststoffrohren der eingangs genannten Art möglich, weil dort nicht nur für das glatte Innenrohr, sondern auch für das gewellte Außenrohr schmelzextrudierte Kunststoff-Materialien und keine geschäumten Materialien zur Anwendung gelangen. Dadurch, daß das erfindungsgemäße mehrschichtige Kunststoffrohr mit einem gewellten aus geschäumtem Kunststoff bestehenden Außenrohr vergrößerter Wanddicke ausgebildet ist, ergibt sich der Vorteil, daß die Rohreigenschaften, was die Flexibilität, die Druckfestigkeit usw. anbelangt, nicht beeinträchtigt werden. Ein weiterer Vorteil des erfindungsgemäßen mehrschichtigen Kunststoffrohres besteht in seiner kostengünstigen Herstellung, weil für das gewellte Außenrohr zweckmäßigerweise ein mit einem Treibmittel aufschäumendes Recyclat zur Anwendung gelangt. Das ist auch unter Umweltgesichtspunkten von Vorteil. Gegebenenfalls kann das gewellte Außenrohr auch aus einem geschäumten Original-Kunststoffmaterial bestehen.

Bei dem erfindungsgemäßen mehrschichtigen Kunststoffrohr kann die Wanddicke des Außenrohres 10 bis 49 % der mittleren Wellbreite des gewellten Außenrohres betragen. Das Außenrohr besteht vorzugsweise aus einem Recyclat aus PE und/oder PP und/oder PVC. Selbstverständlich sind auch andere Kunststoffe bzw. Recyclate anwendbar.

Bei dem erfindungsgemäßen mehrschichtigen Kunststoffrohr werden das glatte Innenrohr, das aus sortenreinem Kunststoff oder aus sortenreinem oder nicht sortenreinem Recyclat bestehen kann, und das gewellte Außenrohr koextrudiert, wobei die beiden Materialströme unmittelbar aufeinandertreffen und ohne jegliche Zugabe von Hilfsmitteln, wie Haftvermittlern, miteinander verschweißt werden.

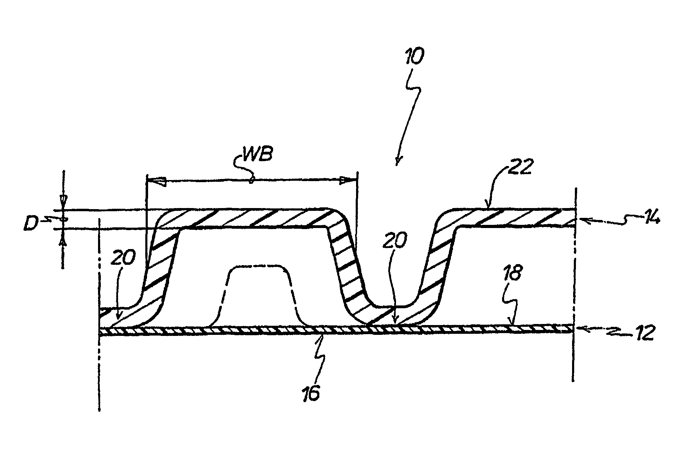

Ein Ausführungsbeispiel des erfindungsgemäßen mehrschichtigen Kunststoffrohres ist in der Zeichnung dargestellt und wird nachfolgend beschrieben.

Die Figur zeigt in einem Längsschnitt einen Abschnitt einer Ausbildung des mehrschichtigen Kunststoffrohres 10, das ein glattes Innenrohr 12 und ein gewelltes Außenrohr 14 aufweist. Das Innenrohr 12 weist eine glatte Innenmantelfläche 16 und eine glatte Außenmantelfläche 18 auf, es besteht z.B. aus sortenreinem Kunststoff. Das gewellte Außenrohr 14 besteht aus einem nicht sortenreinen und mittels eines Treibmittels aufgeschäumten Recyclat. Das gewellte Außenrohr 14 ist mit dem glatten Innenrohr 12 unmittelbar entlang der Bereiche 20 verschweißt.

Die auf halber Wellenhöhe an der Außenfläche 22 des gewellten Außenrohres 14 gemessenen Wellbreite ist in der Zeichnung mit WB bezeichnet. Die Wanddicke D des gewellten Außenrohres beträgt 10 bis 49 % der mittleren Wellbreite WB. In der Figur ist mit durchgezogenen Linien eine Ausbildung des Kunststoffrohres 10 gezeichnet, bei welcher die Wanddicke D ca. 10 % der mittleren Wellbreite WB beträgt. Mit dünnen strichlierten Linien ist in der Figur außerdem eine Ausbildung des mehrschichtigen Kunststoffrohres 10 verdeutlicht, bei welcher die Wanddicke D ca. 40 % der mittleren Wellbreite WB beträgt.

## Patentansprüche

1. Mehrschichtiges Kunststoffrohr mit einem glatten Innenrohr (12) und einem damit verbundenen gewellten Außenrohr (14),
**dadurch gekennzeichnet,**
**daß** das glatte Innenrohr (12) aus einem ersten Kunststoff und daß das gewellte Außenrohr (14) aus einem mittels eines Treibmittels aufschäumenden zweiten Kunststoff besteht, wobei die Wanddicke (D) des gewellten Außenrohres (14) mindestens 10 % der mittleren Wellbreite (WB) des gewellten Außenrohres (14) beträgt.

2. Rohr nach Anspruch 1,
**dadurch gekennzeichnet,**
**daß** die Wanddicke (D) des Außenrohres (14) 10 bis 49 % der mittleren Wellbreite (WB) des gewellten Außenrohres (14) beträgt.

3. Rohr nach Anspruch 1 oder 2,
**dadurch gekennzeichnet,**
**daß** das Innenrohr (12) aus sortenreinem Kunststoff besteht.

4. Rohr nach Anspruch 1 oder 2,
**dadurch gekennzeichnet,**
**daß** das Innenrohr (12) aus Recyclat besteht.

5. Rohr nach Anspruch 1 oder 2,
**dadurch gekennzeichnet, daß** das Außenrohr (14) aus einem Recyclat aus PE und/oder PP und/oder PVC besteht.

6. Rohr nach einem der Ansprüche 1 bis 5,
**dadurch gekennzeichnet, daß** das Innenrohr (12) und das Außenrohr (14) miteinander unmittelbar (bei 20) verschweißt sind.

## Claims

1. Multilayer plastic tubing with a smooth inner tube (12) and a corrugated outer tube (14) connected to it, **characterized in that** the smooth inner tube (12) consists of a first plastic and **in that** the corrugated outer tube (14) consists of a second plastic, expanding by means of a blowing agent, the wall thickness (D) of the corrugated outer tube (14) being at least 10% of the average corrugation width (WB) of the corrugated outer tube (14).

2. Tubing according to Claim 1, **characterized in that** the wall thickness (D) of the outer tube (14) is 10 to 49% of the average corrugation width (WB) of the corrugated outer tube (14).

3. Tubing according to Claim 1 or 2, **characterized in that** the inner tube (12) consists of uniform plastic.

4. Tubing according to Claim 1 or 2, **characterized in that** the inner tube (12) consists of recycled material.

5. Tubing according to Claim 1 or 2, **characterized in that** the outer tube (14) consists of a recycled material comprising PE and/or PP and/or PVC.

6. Tubing according to one of Claims 1 to 5, **characterized in that** the inner tube (12) and the outer tube (14) are welded to each other directly (at 20).

## Revendications

1. Tube multicouches en matière plastique, se composant d'un tube intérieur lisse (12) et d'un tube extérieur ondulé (14) réuni au précédent, **caractérisé en ce que** le tube intérieur lisse (12) est réalisé en une première matière plastique et le tube extérieur ondulé (14) est réalisé en une seconde matière plastique formant une mousse sous l'effet d'un agent initiateur, l'épaisseur de paroi (D) du tube extérieur ondulé (14) représentant au moins 10 % de la largeur moyenne d'une ondulation (WB) du tube extérieur ondulé (1).

2. Tube selon la revendication 1, **caractérisé en ce que** l'épaisseur de paroi (D) du tube extérieur (14) représente 10 à 49 % de la largeur moyenne d'une ondulation (WB) du tube extérieur ondulé (14)

3. Tube selon la revendication 1 ou 2, **caractérisé en ce que** le tube intérieur (12) est réalisé en une matière plastique de qualité pure.

4. Tube selon la revendication 1 ou 2, **caractérisé en ce que** le tube intérieur (12) est réalisé en un matériau recyclé.

5. Tube selon la revendication 1 ou 2, **caractérisé en ce que** le tube extérieur (14) est réalisé en un recyclat de PE et/ou de PP et/ou de PVC.

6. Tube selon l'une quelconque des revendications 1 à 5, **caractérisé en ce que** le tube intérieur (12) et le tube extérieur (14) sont soudés directement l'un avec l'autre (par 20).
